# EUROPEAN PATENT APPLICATION

(11) **EP 1 422 688 A1**
(43) Date of publication of application: **26.05.2004**
(21) Application number: 03090386.8
(22) Date of filing: 15.11.2003
(51) Int. Cl.: G09G 5/00, G06F 3/033

(54) **Graphic user interace for mobile terminal and mobile terminal**

(30) Priority: 20.11.2002 JP 2002336763
(71) Applicant: NEC CORPORATION, Tokyo (JP)
(72) Inventor: Tomita, Kazunori, Minato-ku Tokxo (JP)
(74) Representative: Patentanwälte Wenzel & Kalkoff

(57) **Abstract**

The disclosed display arrangement for mobile terminals includes a display means which displays graphical content on a background graphic which is shown as a base. Through a manipulation means, a graphic style which defines a style of the background graphic to be shown in 3D is selected. A display control means causes the display means to display the background graphic and graphical content in 3D, according to the graphic style selected through the manipulation means.

## Description

### BACKGROUND OF THE INVENTION

### 1. Field of the Invention

The invention relates to a display arrangement for mobile terminals and, more particularly, to such a display arrangement that displays graphical content in three dimensions.

### 2. Description of the Related Prior Art

Display arrangements for mobile terminals designed to display a three-dimensional graphical content on a display device of a mobile terminal have heretofore been used to make a man-machine interface of the mobile terminal easier to manipulate.

One example of prior-art display arrangements for mobile terminals has been disclosed in Japanese Published Unexamined Patent Application No. 2001-224046. According to this document, the display arrangement has a screen that enables a user to view three-dimensional images and displays a three-dimensional menu on the screen, using a technique called a 3D-LCD, thus allowing the user to select a menu item by operating a ball which is an input device.

Another example of the prior-art display arrangements for mobile terminals has been disclosed in Japanese Published Unexamined Patent Application No. 2001-251403. According to this document, the display arrangement is designed to make it possible to display a three-dimensional image on a part of a liquid crystal display and present information such as persons and objects as three-dimensional images on this liquid crystal display, using a lenticular screen method, backlight separation method, or the like.

The foregoing prior-art display arrangements for mobile terminals are only arranged to present information as three-dimensional images simply, using a technique or method pre-established to enable a three-dimensional image display and, therefore, invariable three-dimensional images of objects are always displayed similarly. Graphic styles cannot be customized, according to user preference. A graphic style fit for display content cannot be selected.

### SUMMARY OF THE INVENTION

A display arrangement for mobile terminals of the invention comprises a display means which displays graphical content on a background graphic which is shown as a base, a manipulation means which is used to specify a graphic style which defines a style of the background graphic to be displayed in three dimensions, and a display control means which causes the display means to display the background graphic and graphical content in three dimensions, according to the graphic style specified through the manipulation means.

Therein. the manipulation means issues an image manipulation command to manipulatethegraphicalcontent displayed on the display means and the display control means changes the display of the graphical content, according to the image manipulation command issued from the manipulation means.

The display arrangement for mobile terminals of the invention further comprises a data base to hold graphic data. The display control means reads graphic data from the database, processes the graphic data thus read, according to the graphic style specified through the manipulation means, and causes the display means to display graphical content from the graphic data processed.

When the display control means causes the display means to display the graphical content in accordance with the graphic style specified through the manipulation means, and when some other graphic style different from the graphic style is specified through the manipulation means, the display control means processes the graphic data read from the database in accordance with the some other graphic style and causes the display means to display graphical content from the graphic data processed.

### BRIEF DRSCRIPTION OF THE DRAWINGS

Further objects,featuresand advantagesofthe invention will become apparent from the following detailed description when taken with the accompanying drawings in which:
FIG. 1 is a block diagram of a display arrangement for mobile terminals according to a preferred embodiment.
FIG. 2 is a block diagram showing a concrete example of the display arrangement of the preferred embodiment.
FIG. 3 shows a background graphic example, a cub with infinite depth.
FIG. 4 shows a background graphic example, a globe.

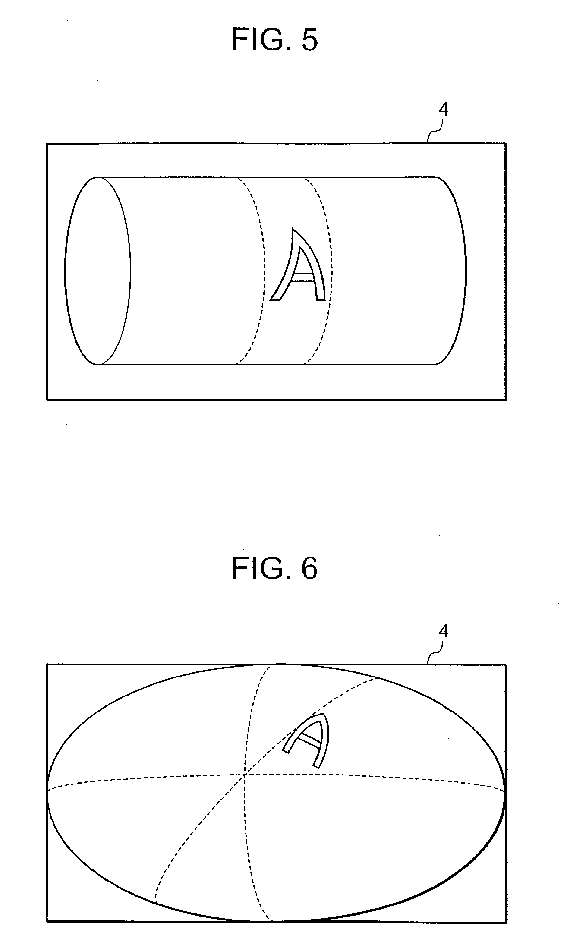

FIG. 5 shows a background graphic example, a rotary drum.
FIG. 6 shows a background graphic example, a planetarium.

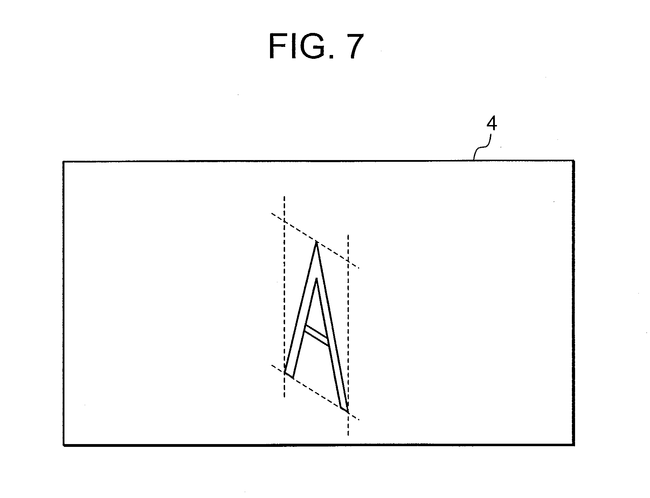

FIG. 7 shows a background graphic example, cosmic space.

### DETAILED DESCRIPTION OF THE PREFERRED EMBODIMENTS

A preferred embodiment of the invention will now be described with reference to the accompanying drawings.

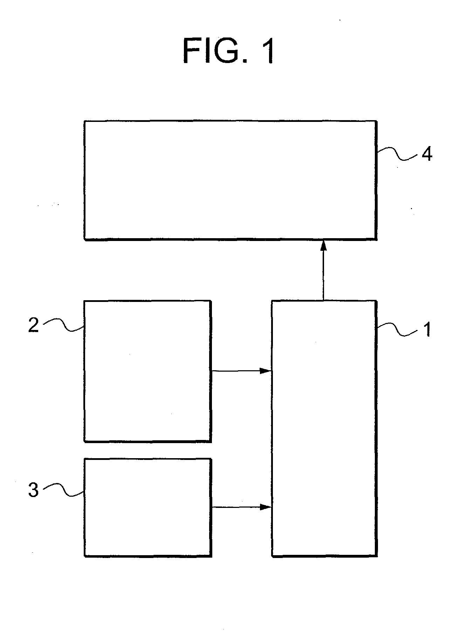

A display arrangement for mobile terminals, which is shown in FIG. 1, comprises a database 3, a display means 4, a manipulation means 2, and a display control means 1.

The database 3 holds graphic data.

The display means 4 is a two-dimensional flat display such as a liquid crystal display 8 which displays graphical content on a background graphic which is shown as a base.

The manipulation means 2 is used to specify a graphic style which defines a style of the background graphic to be shown in three dimensions (hereinafter abbreviated to 3D). The manipulation means 2 issues an image manipulation command to manipulate the graphical content displayed on the display means 4.

The display control means 1 causes the display means 4 to display the background graphic in 3D, according to the graphic style specified through the manipulation means 2. Also, the display control means 1 processes graphic data, read from the database 3, according to the graphic style, and causes the display means 4 to render a 3D image from the processed graphic data on the background graphic, and, moreover, causes the display means 4 to change the display of the graphical content, according to the image manipulation command issued from the manipulation means 2.

Using the manipulation means 2, a user can specify a graphic style by selecting one of a plurality of predetermined options of graphic styles.

The plurality of graphic style options include "a cube with infinite depth," "a ball," "a cylinder," "the inside of a hemisphere," and "3D space without an object displayed." The display control means 1 associates these graphic style options with the following metaphors: "a cube with infinite depth," "a globe," "a rotary drum," "a planetarium," and "cosmic space," respectively.

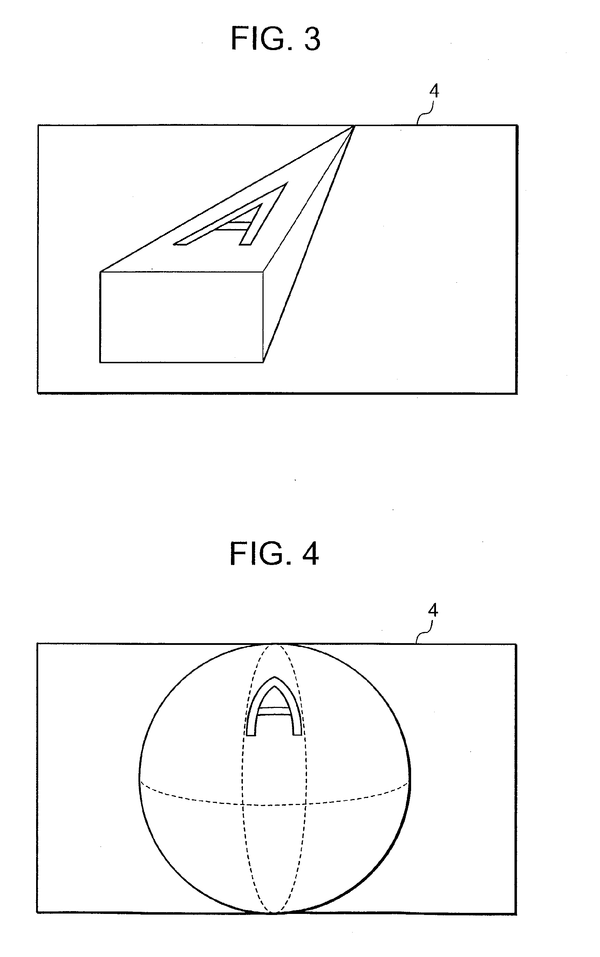

According to the user-selected graphic style, the display control means 1 causes the two-dimensional flat display means 4 to display graphical content in 3D. For example, when the user selects the "globe" metaphor as the graphic style through the manipulation means 2, the globe is displayed as the background graphic on the display means 4 and an object image (e.g., letter A) is displayed with curvature on the surface of the globe, as is illustrated in FIG. 4. As another example, when the user selects the "planetarium" metaphor as the graphic style through the manipulation means 2, for example, the planetarium of the sky full of stars is displayed as the background graphic on the display means 4 and the object image (e.g., letter A) is displayed with curvature on the planetarium of the starry sky, as is illustrated in FIG. 6.

When the user issues a directive to move or rotate the image through the manipulation means 2 while viewing the displayed image on the display means 4, the manipulation means 2 issues the image manipulation command in accordance with the directive of the user. At this image manipulation command, the display control means 1 moves or rotates the image displayed on the current background graphic, thus changing the display of the image.

When the user issues a directive to move or rotate the background graphic through manipulation means 2 while viewing the background graphic displayed on the display means 4, the manipulation means 2 issues a background graphic manipulation command to manipulate the background graphic, according to the directive of the user.

Atthisbackground graphic manipulationcommand,the display control means 1 moves or rotates the background graphic, thus changing the background graphic. As the background graphic moves or rotates, the image displayed on the background graphic also moves and rotates and, thus, the display of the image changes.

When the 3D image of an object is displayed on the display means 4, according to a graphic style specified through the manipulation means 2, suppose that the user wants this object image displayed in some other graphic style and selects the some other graphic style through the manipulation means 2. At this time, the manipulation means 2 newly points to the some other graphic style selected by the user, which is different from the current graphic style. The display control means 1 causes the display means 4 to display the background graphic in accordance with the graphic style newly pointed by the manipulation means 2, processes the graphic data of the so far displayed image, according to the newly selected graphic style, and causes the display means 4 to display a 3D image of the object from the processed graphic data. Through this processing, the 3D image displayed on the background graphic of a certain graphic style is converted into a 3D image adapted to the newly selected graphic style, displayed on the background graphic of the newly selected graphic style (for example, the 3D image of an object on the globe is converted into the 3D image of the object on the planetarium). In this implementation, because the 3D image of an object is to be rendered in order to be displayed, adapted to the background graphic on which the obj ect image is displayed, one item of graphic data for one 3D image object must be stored on the database 3, but it is not necessary to prepare as many data items of the object as the number of graphic styles available.

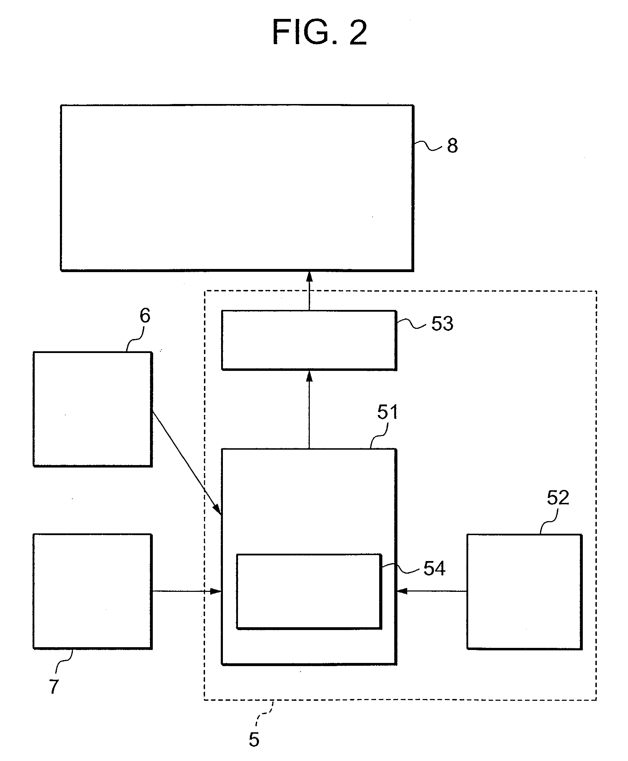

Next, the operation of the display arrangement for mobile terminals of the embodiment will be described in detail, referring to FIG. 2.

In this example, the display arrangement comprises a liquid crystal display 8, a keying device 6, a 3D space information database 7, and a 3D display control unit 5.

The 3D display control unit 5 comprises a 3D space management control unit 51 which includes a graphic policy 54 and executes a function read from a 3D control library 52, and a 3D engine 53 which controls graphics display operation on the liquid crystal display 8, according to the function executed by the 3D space management control unit 51.

The liquid crystal display 8 corresponds to the displaymeans 4 in FIG. 1. However, the display means is not limited to the liquid crystal display 8 and any type of two-dimensional display device may be used as the display means. The keying device 6 corresponds to the manipulation means 2 in FIG. 1, which includes, for example, a numerical keypad, arrow keys, and a pointing device, etc. The 3D space information database 7 corresponds to the database 3 in FIG. 1. The 3D display control unit 5 corresponds to the display control means 1 in FIG. 1.

The display arrangement for mobile terminals can display user interfaces for operating the mobile terminal system or media-rich content (images from complex digital representations built by combination of sound, still pictures, moving pictures, etc. ) in 3D space where depth can be represented visually, by means of its components shown in FIG. 2. Visual rendering capability whichislimited with two-dimensional display can be extended in a depth direction and controlled.

The 3D control library 52 is a collection of functions (programs) which implements rendering and drawing of objects in the 3D space and controls rendered objects, and this library is positioned as a 3D library application program interface (API) for software.

The 3D engine 53 executes displaying graphics on the liquid crystal display 8. It also executes displaying graphics in the 3D space which is represented on the liquid crystal display 8 and manipulating objects displayed in the 3D space. The 3D engine 53 executes drawing and control actions which are called from individual functions in the 3D control library 52 and which correspond to the functionalities of the functions, according to the instructions, thereby producing a visual image on the liquid crystal display 8. The 3D engine 53 may be implemented by software or built as a hardware component and installed. The 3D engine software and its hardware device are equivalent in functionality.

The keying device 6 allows the user to move an object freely in the 3D space represented on the liquid crystal display 8 and is a basic constituent element of mobile terminals such as mobile telephones, Personal Digital Assistants (PDAs), and Personal Digital Cellular (PDC). The keying device 6 may be an arrangement of alphanumerical keys in a numerical keypad form, a direction selector type keying device which enables selection out of 8 or 16 directions, a mouse type pointing device which can be operated by pushing, warping or turning by a thumb and/or a forefinger, or combinations of these devices.

The 3D space management control unit 51 manages and disposes graphic images in the 3D space represented on the liquid crystal display 8. In the 3D space, the 3D space management control unit 51 executes displaying of image data, text data, and texture data descriptive of texture (tile-like, woody, paper-like, etc.) of an image to be displayed, which have been read from the 3D space information database 7 where graphic data is stored, according to the selected graphic style, while calling appropriate functions in the 3D control library 52.

The 3D space information database 7 holds graphic data for disposing menus, icons, windows, etc. of the mobile terminal in the 3D space, which has been loaded beforehand.

The graphic policy 54 contains a plurality of graphic styles for disposing the graphic data in the 3D space under the management of the 3D space management control unit 51.

The 3D space management control unit 51 generates a 3D image, based on the graphic style selected and causes the liquid crystal display 8 to display the 3D image.

The 3D space management control unit 51 has information about the dimensions of the 3D space. The 3D space management control unit 51 receives a command from the keying device 6 in accordance with the user operation, interprets the command, and causes the liquid crystal display 8 to display a 3D image with extension in X, Y, and Z axis directions, respectively, via the 3D engine 53.

Now, a practical operation example using the display arrangement will be described below. Its scenario is rendering a user interface of the mobile terminal in the 3D space on the liquid crystal display 8 under the graphic policy 54 and allowing the user to operate the mobile terminal system, using the 3D user interface on the liquid crystal display 8.

The graphic policy 54 for the 3D space must have been set in the 3D space management control unit 51 beforehand. This graphic policy 54 contains a plurality of graphic styles: "a cube with infinite depth," "a ball," "a cylinder," "the inside of a hemisphere," and "3D space without an object displayed." These styles are respectively associated with the metaphors: "a cube with infinitely extending depth," "a globe," "a rotary drum," "a planetarium," and "cosmic space" which can be intelligible for users.

The graphic policy 54 for the 3D space can be regarded as the graphic styles having the metaphors intelligible for users, associated with the objects in the 3D space world. The graphic policy need not be limited to the above-mentioned metaphors associated with the graphic styles and it is also possible to create a graphic style having a metaphor, for example, "the world inside a Buddha statue."

When the graphic style corresponding to the "globe" metaphor is selected, the 3D space management control unit 51 makes a display of the outside view of the globe on the liquid crystal display 8 and has a plurality of 3D objects disposed, just like being pasted to the surface of this globe along the curvature of the surface. By operating the keying device 6, the user makes the globe rotate and can select one of the plurality of 3D objects disposed on the surface of the globe. When the user selects one 3D object in this way, the mobile terminal system performs action associated with the selected 3D object. By the same operation manner as for rotating the globe from the keying device 6 (for example, pressing a "→" key) , the user can operate the mobile terminal system. The user can operate the globe displayed in 3D representation on the liquid crystal display 8 of the mobile terminal to select a desired object, in the same way as handing a real globe in actual life.

When the graphic style corresponding to the "planetarium" metaphor is selected, the 3D space management control unit 51 makes a display of a night sky view from the ground on the liquid crystal display 8 and has a plurality of 3D objects disposed by being pasted with curvature in this night sky view. In the same manner as for the "globe" metaphor, by operating the keying device 6, the user can select one of the plurality of 3D objects, while hanging around in the planetarium, thereby operating the mobile terminal system.

The "cosmic space" metaphor can be regarded as the "planetarium" metaphor with its ceiling image removed. The "cube" metaphor allows for free dispositions of objects in the depth direction. The "rotary drum" metaphor allows for an infinite rollout of information (of course, a full rotation may come at a point). In addition to the above-mentioned ones, graphic styles suitable for mobile terminal system operation, if available, may be incorporated into the graphic policy 54.

The 3D space management control unit 51 retrieves the metaphor of the selected graphic style from the 3D space information database 7 and makes a display of the metaphor on the liquid crystal display 8 via the 3D engine 53, using a 3D graphics library. After retrieving graphic data items from the 3D space information database 7, in order to have the graphic data items disposed as objects in the 3D space, according to the selected graphic style, the 3D space management control unit 51 calls the 3D engine 53, using the 3D graphics library. By the 3D engine 53, the objects from the graphic data items are displayed on the liquid crystal display 8.

If the graphic policy 54 is changed (another graphic style is newly selected) by user operation with the keying device 6, the 3D space management control unit 51 makes the selected graphic style effective and draws the graphic data items adaptively for the graphic style. For example, the images of the objects mapped on the globe before the change of the graphic policy 54 are remapped onto the planetarium following the change.

The 3D space management control unit 51 manages not only menus and icons that can be displayed in 3D, but also windows to be displayed in conjunction with applications that are activated. These menus, icons, and windows must have been stored into the 3D space information database 7 beforehand. The 3D space management control unit 51 retrieves appropriate menus, icons, or windows from the 3D space information database 7 and makes the menus, icons, or windows displayed on the liquid crystal display 8, using functions in the 3D control library 52 and the 3D engine 53 called by the functions, according to the graphic style.

Thus, for example, when the "globe" metaphor is active, the globe is displayed on the liquid crystal display 8 and a current configuration of available application programs is disposed by being pasted onto the globe. By operating the keying device 6, the user can select a desired application from the current configuration of application programs being displayed. If, for example, a numeric key "9" on the keying device 6 is pressed, a particular application on the globe, corresponding to the selected key, is selected and the graphic image of this application is full screen displayed on the liquid crystal display 8. When a "0" key is pressed, the display returns to the globe image which was displayed until just before this application image.

When the user properly selects one of the right, left, up and down keys on the keying device 6, the 3D space management control unit 51 can make a display of, for example, a current list image of tasks that are running on the mobile terminal displayed, while rotating the globe. That is, by pressing any of the right, left, up, and down keys, the globe revolves in the 3D space in the direction corresponding to the actuated key. By this revolution, the hidden part of the globe becomes visible. For example, if a telephone directory application is located in the terrestrial position of Japan on the globe and a browser application is located in the terrestrial position of Australia on the globe, these applications can be selected as the user points at theses positions in order, using the keying device 6. In this case, the telephone directory application is mapped to the image of the geographical configuration of Japan and the browser application is mapped to the image of the geographical configuration of Australia.

The 3D space management control unit 51 can make a simultaneous display of a combination of plurality of metaphors on the liquid crystal display 8. This is performed by using nested management control in the 3D space management control unit 51. For example, when the "planetarium" metaphor is selected and when the user selects a menu task from the tasks pasted to this metaphor by operating the keying device 6, the menu may be displayed in the form of the "rotary drum" metaphor separately. Then, the user can select an item from the displayed menu by properly operating the keying device 6.

Because background graphic representation in the 3D space displayed on the liquid crystal display 8 varies, depending on the selected graphic style (metaphor), the 3D space management control unit 51 changes the metaphor and object image movement corresponding to the keys on the keying device 6, according to the selected metaphor, taking account of the easiness to operate for the background graphic being displayed in the 3D space.

For example, if the 3D space management control unit 51 selects a "rectangular solid" metaphor as the graphic policy 54, movement in the right and left and forward and backward directions can be controlled by arrow keys. It is also possible to make numeric keys "0," "9," "4," and "6" correspond to the directions of movement. In this relation, the numerical keypad may be arranged to switch from controlling movement in the space to a function of a direct call for a task to activate when a specific key such as "Clear" is pressed. If the "globe" metaphor is selected, the rotation of the globe is controlled by the arrow keys and the numerical keys.

While 3D rendering of user interfaces for mobile terminal system operation on the liquid crystal display 8 has been described hereinbefore, the display arrangement of the present invention can be applied to rendering media-rich content in 3D on the liquid crystal display 8. In this case, the display arrangement operation is the same as described hereinbefore, but there is only a difference in terms of graphical content that is pasted to a metaphor background graphic; that is, media-rich content (images from complex digital representations built by combination of sound, still pictures, moving pictures, etc.) and objects in 3D form such as desks, pots, vases, dogs, persons, etc. are pasted, instead of menus, icons, windows, tasks, etc. Such media-rich contents and objects must have been stored into the 3D space information database 7. These contents and obj ects are retrieved from this database and presented by being suitably arranged and pasted to the background graphic (metaphor) of the currently selected graphic style. When the user selects a content or object by operating the keying device 6, the selected content or object is full screen displayed on the liquid crystal display 8.

As explained hereinbefore, the display arrangement for mobile terminals of the present invention includes the display means 4 which displays graphical content on the background graphic which is shown as the base. Through the manipulation means 2, a graphic style which defines a style of the background graphic to be shown in 3D is selected. The display control means 1 causes the display means 4 to display the background graphic and graphical content in 3D, according to the graphic style selected through the manipulation means 2. This display arrangement can change the graphic style that is displayed in 3D, according to user preference, and enables the user to select a graphic style suitable for display content.

While the invention has been described in connection with preferred embodiments, it is to be understood that the subject matter encompassed by the invention is not limited to those specific embodiments. On the contrary, it is intended to include all alternatives, modifications, and equivalents as can be included within the spirit and scope of the following claims.

## Claims

1. A display arrangement for mobile terminals comprising:
a display means that displays graphical content on a background graphic that is shown as a base;
a manipulation means that specifies a graphic style that defines a style of said background graphic to be displayed in three dimensions; and
a display control means that causes said display means to display said background graphic and said graphical content in three dimensions, according to said graphic style specified through said manipulation means.

2. Display arrangement as claimed in claim 1, wherein said manipulation means issues an image manipulation command to manipulate said graphical content displayed on said display means and said display control means changes the display of said graphical content, according to said image manipulation command issued from said manipulation means.

3. Display arrangement as claimed in claim 2, wherein a change of the display of said graphical content, which is made by said display control means in accordance with said image manipulation command, includes movement and rotation of said graphical content.

4. Display arrangement as claimed in any one of claims 1 to 3, further comprising a database that holds graphic data,
wherein said display control means reads said graphic data from said database, processes said graphic data thus read, accordingtosaidgraphicstylespecifiedthroughsaidmanipulation means, and causes said display means to display said graphical content from said graphic data processed.

5. Display arrangement as claimed in claim 4, wherein, when said display control means causes said display means to display said graphical content in accordance with said graphic style specified through said manipulation means, and when some other graphic style different from said graphic style is specified through saidmanipulationmeans, said display control means processes said graphic data read from said database in accordance with said some other graphic style and causes said display means to display graphical content from said graphic data processed.

6. Display arrangement as claimed in any one of claims 1 to 5, wherein said manipulation means selects one of a plurality of predetermined graphic style options, thus specifying said graphic style.

7. Display arrangement as claimed in claim 6, wherein said plurality of graphic style options include "a cube with infinite depth," "a ball," "a cylinder," "the inside of a hemisphere," and "three-dimensional space without an object displayed."

8. Display arrangement as claimed in any one of claims 1 to 9,
wherein said manipulation means issues a background graphicmanipulation command tomanipulate saidbackground graphic and said display control means changes said background graphic, according to said background graphic manipulation command issued from said manipulation means, and changes said graphical content displayed on said background graphic in accordance with a change of said background graphic.

9. Display arrangement as claimed in claim 8 , wherein a change of said background graphic, which is made by said display control means in accordance with said background graphic manipulation command, includes movement and rotation of said background graphic, and said graphical content displayed on said background graphic moves or rotates as said background graphic moves or rotates.

10. Display arrangement as claimed in any one of claims 1 to 9, wherein said graphical content which is displayed on said display means includes menus, icons, and windows.

11. Display arrangement as claimed in any one of claims 1 to 10, wherein said graphical content which is displayed on said displaymeans is objects in three-dimensional form including desks, pots, vases, dogs, and persons.
